# EUROPEAN PATENT APPLICATION

(11) **EP 1 223 772 A1**
(43) Date of publication of application: **17.07.2002**
(21) Application number: 01104711.5
(22) Date of filing: 26.02.2001
(51) Int. Cl.: H04Q 7/38

(54) **Communication method and system for controlling with limited area information**

(30) Priority: 10.01.2001 JP 2001002050
(71) Applicant: Hitachi, Ltd., Chiyoda-ku, Tokyo 101-8010 (JP)
(72) Inventor: Aburai, Maki, c/oHitachi, Ltd.,Intell. Prop. Group, , Chiyoda-ku, Tokyo 100-8220 (JP); Hirasawa, Mitsuru, c/oHitachi, Ltd.,Intel.Prop.Gr., , Chiyoda-ku, Tokyo 100-8220 (JP); Hamaguchi, Kazuko, c/oHitachi, Ltd.,Intel.Prop.Gr., , Chiyoda-ku, Tokyo 100-8220 (JP); Sasaki, Toshiichirou, c/oHitachi,Ltd.,Intel.Pro.G., , Chiyoda-ku, Tokyo 100-8220 (JP)
(74) Representative: Strehl Schübel-Hopf & Partner

(57) **Abstract**

Position information on a mobile communication device (104) is acquired in the form of latitude and longitude or of latitude, longitude and altitude. Usage information is held in a communication control device (105) in the form of limits of latitude and longitude or of latitude, longitude and altitude. The communication control device control the mobile communication device to put in a prohibited mode corresponding to the usage information. When the mobile communication device corresponds to the usage limit, the communication control device prompts a bearer of the mobile communication device to put its prohibited mode, and then transmits a prohibited mode control signal to the mobile communication device.

## Description

### BACKGROUND OF THE INVENTION

The present invention relates to a communication technique for controlling a mobile communication terminal according to its usage limit.

The number of persons carrying mobile communication devices has been rapidly increased in these years which mobile communication device can receive and send information anytime and anywhere. In public transportation facilities, medical facilities, movie theaters, etc., on the other hand, restricted use of the mobile communication device is demanded because the use of the mobile communication device in such a place causes inconvenience to others. A mobile communication system disclosed in JP-A-10-276475 is arranged such that a predetermined base station, i.e., a wireless base station for use restriction is installed in an area where use of wireless terminals is to be restricted or limited, and when a mobile station is positioned within the wireless area of the base station, the predetermined base station is controlled so as to offer a service unique to the predetermined base station to the mobile station. JP-A-11-004192 discloses "usage search/alarm apparatus for a portable telephone device" which can detect the portable telephone device entered into a usage prohibition area and issues an alarm indicative of the usage prohibition thereto. "A portable telephone system having an automatic stop function" disclosed in JP-A-2000-041282 restricts operation of a predetermined function of a portable telephone device when the portable telephone device receives an alarm signal from a position alarm device installed at a location where use of portable telephone devices is to be restricted. In "portable terminal device and an incoming-call notifying method" disclosed in JP-A-11-187091, a function of measuring a moving speed of a portable terminal device is provided to the portable terminal device, so that, when the moving speed exceeds a predetermined value, the terminal device automatically changes its incoming-call mode. As technology for identifying a position of an mobile communication device there is a position measurement utilizing satellites, such as the global positioning system (GPS) which determines a position of a mobile communication device by measuring distances thereof from three or more of twenty four satellites launched by the U.S. Forces. and mobile communication device equipped with the PGS have been commercialized. Further there exist a technology such as a personal handyphone system (PHS) utilizing the narrowness of a communication propagation area of a base station for positioning, and a technology utilizing radio waves radiated from a base station of a PHS or CDMA (code division multiple access) system to measure a position of a mobile device based on a triangulation method.

### SUMMARY OF THE INVENTION

In the aforementioned "mobile communication system" which restricts use of mobile communication devices based on the wireless base station, it is difficult to set a limited area in the form of limits of latitude and longitude or limits of latitude, longitude and altitude, which may possibly result in that, in an area where many buildings are densely located, even use of a mobile communication device not associated directly therewith may be restricted. Furthermore, in the above "mobile communication system", "usage search/alarm apparatus for portable telephone device", or "portable telephone system having the automatic stoppage function"; to know that the portable telephone device entered into the usage prohibition area, such wireless base station, usage search/alarm apparatus or position alarm device must be installed in an area where use of portable telephone devices is to be restricted or prohibited. However, since these technologies restrict the use of the mobile communication devices by radiating radio waves into the usage prohibited area, this essentially does not means to suppress the waves. In the aforementioned "portable terminal device and incoming-call notifying method", since the incoming-call mode is switched according to the moving speed of the portable terminal device, it is impossible to realize the switching of the incoming-call mode of a portable terminal device approaching to the prohibition area at a walking speed.

Accordingly, an object of the present invention is to provide a communication method and system which can control set a mobile communication device to set in a prohibited mode according to usage limiting information.

In accordance with the present invention, there are provided a mobile communication device communication method and system in which positional and usage information is communicated when the use of the device corresponds to its usage limit. The system is featured by including steps of judging whether or not the use of the mobile communication device corresponds to its usage limit by collating positional information of the mobile device including a latitude and longitude of the device or including a latitude, longitude and altitude thereof with usage information set in the form of limits of latitude and longitude or in the form of limits of latitude, longitude and altitude; and transmitting or receiving usage information according to its judgement result.

In accordance with the present invention, when the mobile communication device corresponds to its limited usage, a communication control device transmits a prohibited mode control signal to the mobile communication device to urge the holder of the mobile device to set the device in a power OFF mode, an incoming-call sound OFF mode or an automatic answering mode in which no wave will directly reach the device, so that, when the device receives the prohibited mode control signal, the device issues an alarm signal such as character data, sound, vibration, light or smell. Further, when the holder of the mobile communication device corresponding to the usage limit fails to set the device in the prohibited mode according to the prohibited mode control signal received from the communication control device within a predetermined continuous time of the alarm signal set by the communication control device, the communication control device controls the device to set in its prohibited mode.

As has been explained above, in accordance with the present invention, by setting a specific limited usage area, e.g., in the form of a range of latitude, longitude or a range of latitude, longitude and altitude, a portable terminal device having entered into the limited usage area can be correctly pickedup. Further, by grasping the positional information of the terminal device about latitude and longitude or latitude longitude and altitude, and collating the positional information of the device with usage area information stored in an information control center indicating the limited usage of the terminal device, the prohibited area set in terms of a range of latitude and longitude, or a range of latitude longitude and altitude, or a time zone, the communication control device can control the terminal device to set the mode in a prohibited mode based on the usage area information, without installing the communication control device radiating radio wave in the prohibited area.

### BRIEF DESCRIPTION OF THE DRAWINGS

Fig. 1 schematically shows a network environment of an embodiment of the present invention;
Fig. 2 shows a schematic arrangement of a communication control device in the present embodiment;
Fig. 3 shows a schematic arrangement of a mobile communication device in the present embodiment;
Fig. 4 shows a structure of a table of usage information database (DB) within the communication control device in the present embodiment;
Fig. 5 shows a structure of a table of positional information DB of mobile communication devices under control of the communication control device in the present embodiment;
Fig. 6 shows examples of character data on a display screen of the mobile communication device in the present embodiment;
Fig. 7 is a flowchart showing the operations of the communication control device in a procedure of operations between the communication control device and mobile communication device in the present embodiment;
Fig. 8 is a flowchart showing the operations of the mobile communication device in the procedure of operations between the communication control device and mobile communication device in the present embodiment;
Fig. 9 is a flowchart showing a procedure of the operations of the communication control device in the present embodiment;
Fig. 10 schematically shows a structure of independent operations of the mobile communication device in the present embodiment;
Fig. 11 shows a schematic arrangement of the mobile communication device when the independent operation of the mobile communication device is used in the present embodiment; and
Fig. 12 is a flowchart showing a procedure of operations the mobile communication devices when the independent operations of the mobile communication devices are used in the present embodiment.

### DETAILED DESCRIPTION OF EMBODIMENTS

An embodiment of the present invention will be explained with reference to accompanying drawings. The present invention will be explained in connection with a system in which an information control center as a communication control device confirms a position and prohibited mode of an mobile communication device carried by a person who is moving toward a restricted area set in a second floor of a hospital, and when the position is in a limited usage area set by the information control center, the information control center issues a signal to prompt the bearer to set his terminal device in a prohibited mode corresponding to the contents of a limited usage request set in its usage information database (DB).

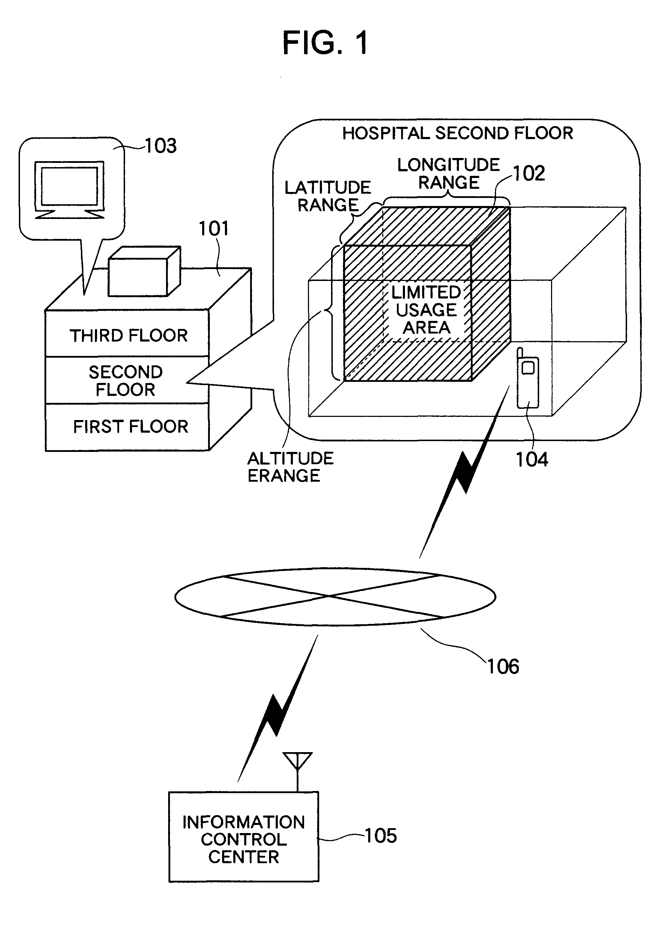

Fig. 1 schematically shows a network environment of an embodiment of the present invention. As shown in Fig. 1, a communication method and system, a communication control method and device, and an information communication terminal method and device in the present embodiment include a limited object 101 having an area in which usage of an mobile communication device is to be limited, a limited usage area 102 of the mobile communication device set in the limited object 101, a limited usage requester 103 who issues a request to the information control center to limit the usage area of the mobile communication device, and mobile communication device 104, an information control center 105, and a network 106. A request to register the limited usage area 102 in the limited object 101 as a restricted area to the information control center 105 is transmitted from the limited usage requester 103 to the information control center 105, whereas, the information control center 105, when receiving the request, registers the limited usage area 102 as a restricted area. The positional information of the mobile communication device 104 is periodically grasped by the information control center 105 and collated with limited area information registered in the information control center, so that, when the positional information coincides with the collated result, the information control center 105 transmits a prohibited mode control signal to the mobile communication device 104. The mobile communication device 104, when receiving the signal, processes it so as to be put in its prohibited mode satisfying the contents of the signal. The usage limitations include prohibition of use of the mobile communication device and information about not only a prohibited area but also a time zone of limited usage. The limited usage area 102 of the mobile communication device may be defined as a location where the whole building is regarded as a two-dimensional area having widths of latitude and longitude as in the limited object 101, as a location where the whole building is regarded as a three-dimensional zone having widths of latitude, longitude and altitude, or as a location of a part (e.g., a conference room on a floor) of the building in a three-dimensional space. Further, the restricted area may be set, for example, as an expanded area including its peripheral zones extended by several meters therefrom so that, before a mobile device enters into the restricted area, the device can receive an alarm signal. Furthermore, the present invention can cope with the case where communication of the device on a train is limited, by registering its train area as a restricted area, and the case where passengers' talk through their mobile devices is limited during taking-off or landing of an airplane, by registering its runway of the terminal as a restricted area. In addition, the limited usage area may be defined as a circle area having a radius of several meters, as a postal code or address code. The network 106 is a communication network for interconnection between the mobile communication device 104 and information control center 105. The information control center 105 has functions of holding a limited usage request from the limited usage requester 103 to the mobile communication device 104 as a database, collating the positional information of the mobile communication device 104 with its usage information database, and, when finding a coincidence therebetween, transmitting a prohibited mode control signal to the mobile communication device 104. Acquisition of the positional information of the mobile communication device 104 can be realized by a GPS or Russian GLONASS (global navigation satellite system) equivalent thereto, position measurement by utilizing a European satellite such as a Galileo, position measurement based on the complementation of artificial pseudo satellites installed on the ground such as Pseudolites, a position measuring technology by utilizing the narrowness of a communication propagation area of a base station such as PHS, a position measuring technology based on a triangulation method by utilizing electromagnetic wave transmitted from the base station of portable telephone devices, a position grasping technique for getting position information from a fixed object placed on a road or the like when a mobile communication device passes by the object, or a system corresponding to a combination of two or more position measuring techniques such as grasping of a position with use of the GPS system and communication line. The mobile communication device 104 includes a portable terminal having a communication part such as a portable telephone device or PHS and personal digital assistants (PDA), and is not intended to means a single specific terminal.

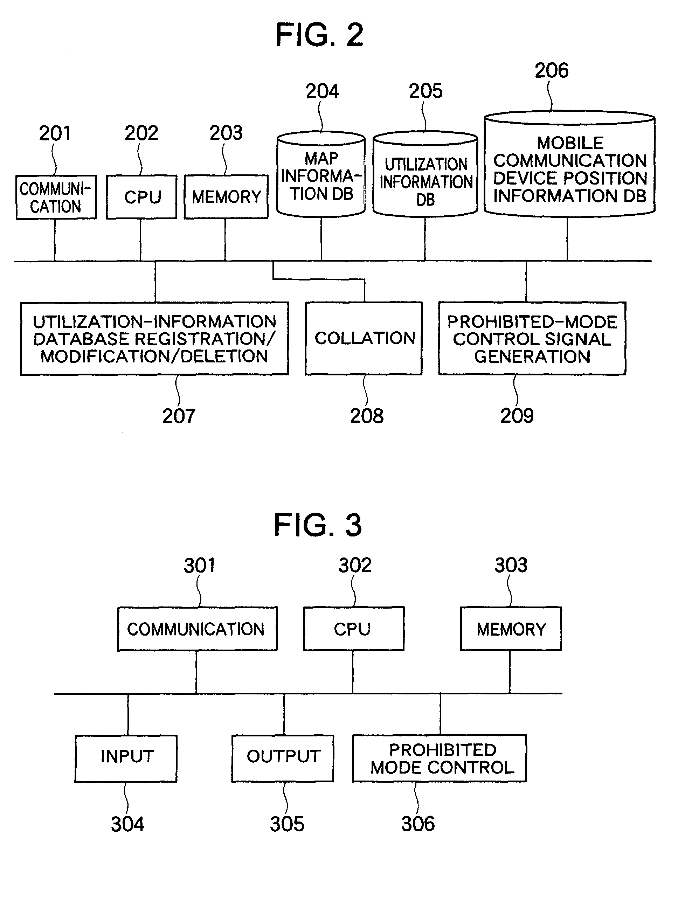

Fig. 2 shows a functional structure of the information control center 105 in the present embodiment. As shown in Fig. 2, the information control center 105 in the present embodiment has a communication unit 201, a CPU 202, a memory 203, a map information database 204, a utilization information database 205, a mobile communication device position information database 206, a utilization-information database registration/modification/deletion unit 207, a collation unit 208, and a prohibited-mode control signal generation unit 209.

The communication unit 201 functions to transmit a prohibited mode control signal to the mobile communication device 104 or to communicate therewith. The CPU 202 executes all functions of the information control center. The memory 203 is used to temporarily store therein the contents of a procedure carried out by the information control center 105. The map information database 204 has detailed map information and converts a limited usage area given by the limited usage requester 103 in the form of a building name or the like into, e.g., numeral values of latitude, longitude and altitude or into a postal or zip code or an address code for registering it in the utilization information database 205. Thee utilization information database 205 has the contents of requests relating to a limited usage area or limited usage time zone issued from the limited usage requester 103 as limited usage information. The mobile communication device position information database 206 updates and stores the position information of the mobile communication device 104 from time to time. In this connection, the mobile communication device position information database 206 may be replaced with such a temporary file as to be saved on the memory 203. The utilization-information database registration/modification/deletion unit 207 functions to accept a request from the limited usage requester 103 and process it according to the request. The collation unit 208 collates the limited usage area of the utilization information database 205 with the position information of the mobile communication device position information database 206 about the mobile communication device 104 or collates the limited usage time zone of the utilization information database 205 with a current time. The prohibited-mode control signal generation unit 209 generates a prohibited mode control signal when the contents of the utilization information database 205 coincides with the contents of the mobile communication device position information database 206 and it is desired to generate the prohibited mode control signal.

Fig. 3 shows a functional structure of the mobile communication device 104 in the present embodiment. As shown in Fig. 3, the mobile communication device 104 has a communication unit 301, a CPU 302, a memory 303, an input unit 304, an output unit 305, and a prohibited mode control unit 306.

The communication unit 301 receives the prohibited mode control signal transmitted from the information control center 105 or communicates therewith. The CPU 302 performs various functions in the mobile communication device 104. The memory 303 temporarily stores therein the contents of operation carried out by the mobile communication device 104. The input unit 304 provides a character input or a voice input if necessary from the mobile communication device. The output unit 305 outputs data on character, voice or light onto the screen of the mobile communication device. The output of the alarm signal is considered to be a display of character data on the display screen, a voice notification, light display or vibrational notification, though depending on the type and situation of the mobile communication device 104. The prohibited mode control unit 306 decodes the prohibited mode control signal received from the information control center 105, and judges whether or not to output a alarm signal. When determining the output of the alarm signal, the prohibited mode control unit 306 generates the alarm signal to be output from the output unit 305, recognizes the type of the prohibited mode demanded by the prohibited mode control signal transmitted from the information control center 105 or the continuous output time of the alarm signal, and in the case of absence of a requested set modification within the continuous output time, changes the current mode to the requested prohibited mode without any input operation of the mobile communication device 104 by its bearer from the input unit 304.

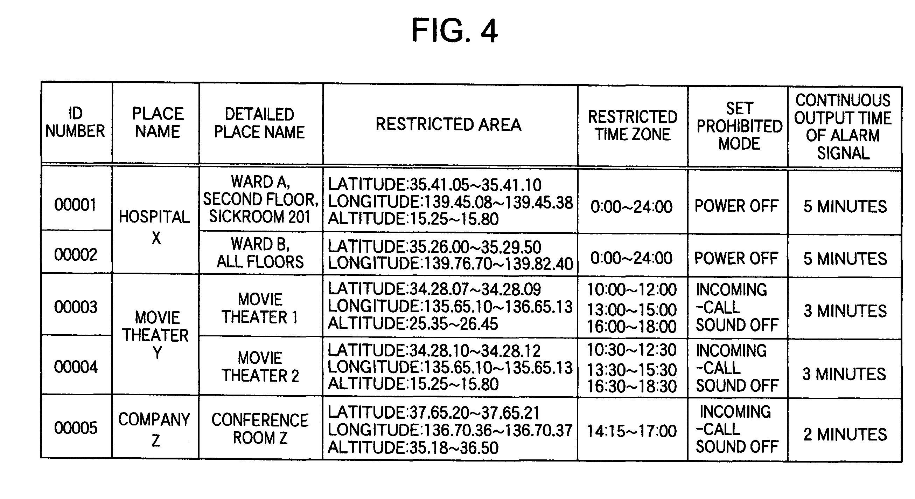

Fig. 4 shows an exemplary structure of a table of the utilization information database 205 in the present embodiment. As shown in Fig. 4, the table structure of the utilization information database 205 in the present embodiment includes information, that is, as an example, information ID numbers of the limited usage areas of the mobile communication device 104, place names of the limited usage areas, detailed place names when the limited usage areas are further divided, restricted areas represented by latitude and longitude or by latitude, longitude and altitude, limited usage time zones by which the restricted areas of the usage of the mobile communication device 104 are represented, types of the set prohibited modes demanded in the restricted areas, and continuous output times of the alarm signal for informing the mobile communication device 104 of the fact that the device entered into the restricted area; but the present invention is not limited to the specific example. In this conjunction, the representations of the limited usage areas include numeral values or symbols indicative of area and address codes, but not limited to the specific example.

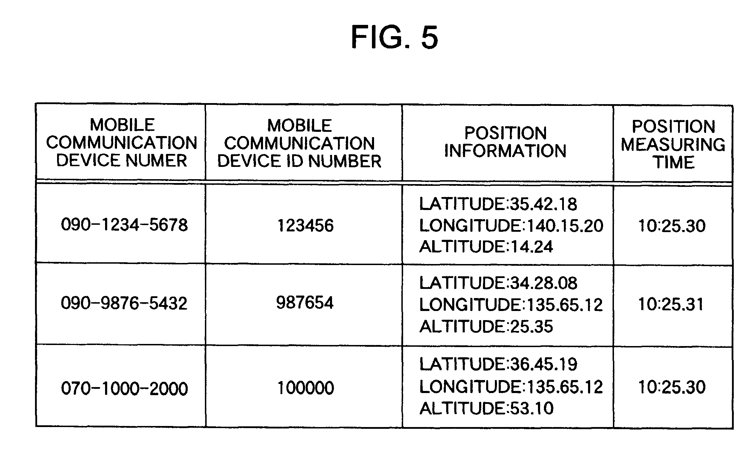

Fig. 5 shows an exemplary structure of a table of the mobile communication device position information database 206 in the present embodiment. As shown in Fig. 5, the table structure of the mobile communication device position information database 206 in the present embodiment include telephone and ID numbers of the mobile communication device 104, position information represented by data of latitude and longitude or of latitude, longitude and altitude at the time of position measurement, and a time at the time of the position measurement. It is assumed that the position information and position measurement time are overwritten by the latest information from time to time. In this case, the measured position information of the mobile communication device include numeral values or symbols indicative of area or address codes, but not limited to the specific example. It is also assumed that, even when the limited usage requester 103 issues a request to the mobile communication device 104 to restrict its use in a restricted area but can express the restricted area only in the form of, e.g., "first to third floors of the ward B in the hospital A" but cannot express it in the form of actual numeral values of latitude, longitude and altitude, the map database can have information or a function of converting it to such numeral values.

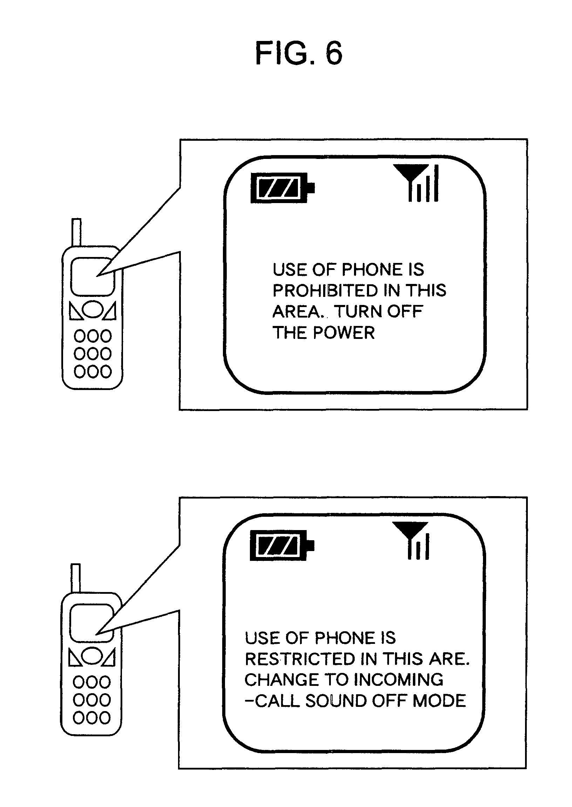

Fig. 6 shows an example of character data on the display screen to prompt the bearer of the mobile communication device 104 to change the current mode to the prohibited mode when the prohibited mode control unit 306 of the mobile device 104 generated a alarm signal and outputted it to the output unit 305. In this connection, the output of the alarm signal is considered to be, in addition to the display of character data, voice notification, light indication or vibrational notification, though different according to the type of the mobile terminal device.

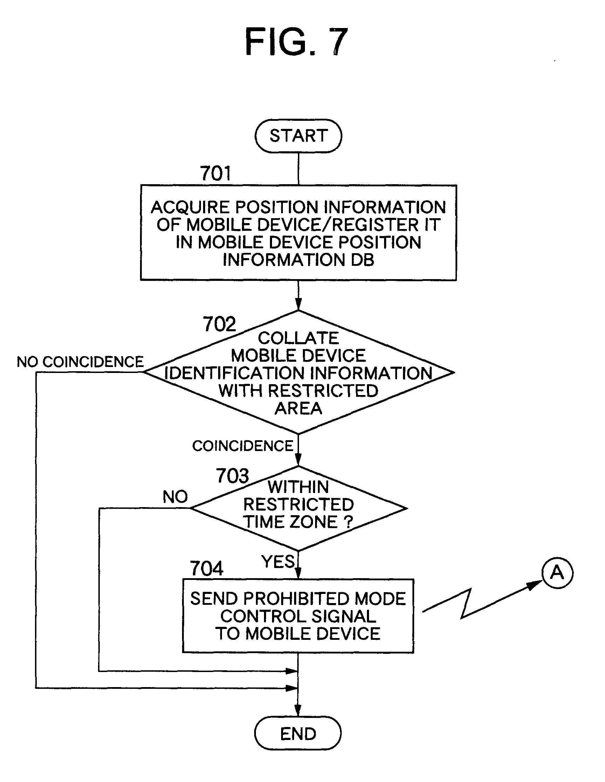

Fig. 7 is a flowchart showing a procedure of operations of the information control center 105 in the operations of the information control center 105 and mobile communication device 104 in the present embodiment. Explanation will be made as to the procedure by referring to the flowchart of Fig. 7.

In a step 701, the information control center 105 acquires position information of the mobile communication device 104 and registers it in the mobile communication device position information database 206. It is assumed that the position information of the mobile communication device 104 is updated from time to time as soon as the center receives the latest information. In a step 702, the information management center collates the position information of the mobile communication device 104 registered in the mobile communication device position information database 206 with the position information of the limited usage area registered in the utilization information database 205 at the collation unit 208. The mobile communication device position information database 206 is assumed to be replaced by a temporary file saved on the memory 203. When finding a non-coincidence therebetween as a result of the collation, the center terminates its procedure. When finding a coincidence therebetween, the center proceeds to a step 703 to collate a current time with the restricted time zone of the utilization information database 205 at the collation unit 208. When determining that the current time is out of the restricted time zone a result of the collation, the center terminates its procedure. When determining the current time is within the restricted time zone as the collation result, the center proceeds to a step 704, generates a prohibited mode control signal at the prohibited-mode control signal generation unit 209, and transmits the prohibited mode control signal from the communication unit 201 to the mobile communication device 104. With respect to the collation, it is also possible to place in the mobile communication device 104 both the position information of the limited usage area registered in the utilization information database 205 in the information control center 105 and the position information of the mobile communication device 104 registered in the mobile communication device position information database 206 to enable the collation within the mobile communication device 104 without any intervention of the information control center 105. In this case, the prohibited mode can be controlled only by the mobile communication device 104 without any intervention of the information control center 105 and thus the amount of communication can be reduced. Further, even when the position information of the limited usage area registered in the utilization information database 205 is present in the information control center 105, the limited usage information sent to the mobile communication device 104 is once stored in the mobile communication device 104. And from the second time and on, when the mobile communication device entered into the limited usage area, the position information of the mobile communication device can control its prohibited mode without any intervention of the information control center 105, thus enabling reduction of the amount of communication.

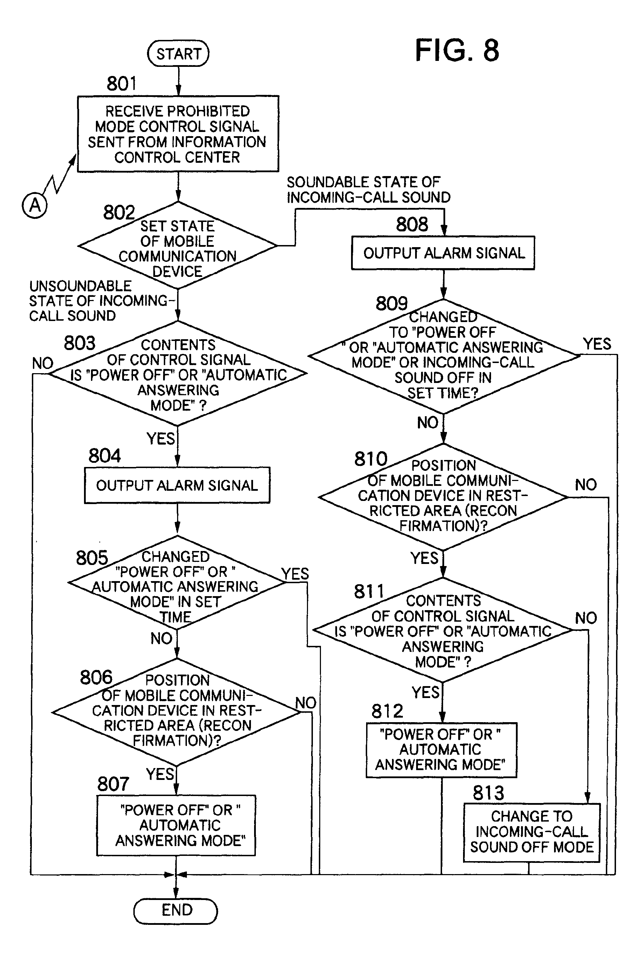

Fig. 8 is a flowchart showing a procedure of operations of the mobile communication device 104 in the procedures of the operations of the information control center 105 and mobile communication device 104 in the present embodiment. The procedure will be explained by referring to the flowchart of Fig. 8.

The mobile communication device 104 goes from the step 703 to a step 801, and receives at the communication unit 301 the prohibited mode control signal from the information control center 105.

The mobile device proceeds to a step 802 to discriminate at the prohibited mode control unit 306 whether or not sounding of an incoming-call sound is prohibited in the current prohibited mode of the mobile communication device 104. When determining that the sounding of the incoming-call sound is prohibited, the mobile device proceeds to a step 803. In the step 803, the mobile device discriminates at the prohibited mode control unit 306 whether or not the prohibited mode control signal indicates "power off" or "automatic answering mode" wherein data on speech or communication is stored in the information control center or the like for later use. Otherwise, the mobile device terminates its procedure. When the prohibited mode control signal indicates "power off" or "automatic answering mode", the mobile device goes to a step 804 where the prohibited mode control unit 306 generates a alarm signal and the output unit 305 outputs the alarm signal, after which the mobile device proceeds to a step 805. In the step 805, the prohibited mode control unit 306 recognizes a change or non-change of the prohibited mode to "power off" or "automatic answering mode" by the input unit 304 of the mobile communication device 104 within the continuous output time of the alarm signal. The change of the prohibited mode to "power off" or "automatic answering mode" by the input unit 304 causes the mobile device to terminates its procedure. When no change to "power off" or "automatic answering mode" within the continuous time causes the mobile device to go to a step 806. In the step 806, the prohibited mode control unit 306 discriminates whether or not the current location of the mobile communication device 104 is in the restricted area. When the prohibited mode control unit 306 determines that the current location is in the restricted area, the mobile device terminates the output of the alarm signal and terminates its procedure. When determining as the discriminated result, that the mobile communication device 104 is in the restricted area, the mobile device terminates the output of the alarm signal and terminates its procedure. When the prohibited mode control unit 306 determines as the discriminated result that the mobile device is the restricted area, the mobile device proceeds to a step 807 where the prohibited mode control unit 306 turns off the mobile communication device 104 or puts the mode thereof in "automatic answering mode". The mobile communication device 104 discriminates in the step 806 whether or not the current location of the mobile device 104 is in the restricted area. Therefore, even after the alarm signal was once issued, when the bearer of the mobile communication device 104 moves out of the restricted area to want to talk, it can be avoided that the power of the mobile communication device 104 is turned OFF or is put in "automatic answering mode".

When the prohibited mode control unit 306 judges in the step 802 that the mobile communication device 104 is in such a mode that the alarm signal cannot be transmitted to the bearer of the mobile device and at the same time, when the contents of the prohibited mode control signal is "power off" or "automatic answering mode"; the mobile device skips from the step 802 to the step 807 where the prohibited mode control unit 306 causes the power of the mobile communication device 104 to be turned OFF or to be put in "automatic answering mode". As a result, in such a place where use of the mobile communication device 104 may lead to a serious trouble in life-sustaining equipment as in a hospital, even when the mobile communication device 104 is in the "automatic answering mode" wherein communication can be established, it can be avoided that such a prohibited mode control signal as to cause generation of the alarm signal in the mobile communication device 104 is transmitted to the mobile communication device 104.

When the prohibited mode control unit 306 judges in the step 802 that the mobile communication device 104 is set to such a mode that an incoming-call sound is issued, the mobile device proceeds to a step 808 where a alarm signal generated by the prohibited mode control unit 306 is output to the output unit 305 and the mobile device moves to a step 809. In the step 809, the prohibited mode control unit 306 discriminates whether the prohibited mode control signal of the mobile communication device 104 is "power off" or "automatic answering mode" or the input unit caused the mobile device to put in such a mode that no incoming-call sound is issued during the continuous output time of the alarm signal. When the prohibited mode was changed to such a mode as to satisfy the demand during the continuous output time of the alarm signal, the mobile device terminates it procedure. When the prohibited mode was not changed to such a mode as to satisfy the demand during the continuous output time of the alarm signal, the mobile device proceeds to a step 810. In the step 810, the prohibited mode control unit 306 discriminates whether or not the current location of the mobile communication device 104 is in the restricted area. When the prohibited mode control unit 306 determines that the current location of the mobile device is out of the restricted area, the prohibited mode control unit 306 terminates the output of the alarm signal and terminates its procedure. If the discriminated result indicates the current location is in the restricted area, then the mobile device moves to a step 811 where the prohibited mode control unit 306 discriminates whether or not the prohibited mode control signal is "power off" or "automatic answering mode". When the discriminated result indicates "power off" or "automatic answering mode", the mobile device proceeds to a step 812 where the prohibited mode control unit 306 turns off the power of the mobile device or puts the device in "automatic answering mode". If the prohibited mode control unit 306 judges that the contents of the prohibited mode control signal received from the information control center 105 does not mean to demand "power off" or "automatic answering mode" in the step 811, then the mobile device moves to a step 813 where the prohibited mode control unit 306 changes the mobile device to such a mode as not to issue an incoming-call sound. In the present embodiment, so long as the mobile communication device 104 is not set to such a prohibited mode that the bearer of the mobile device cannot confirm the acceptance of the prohibited mode control signal, the center prompts the bearer to change the setting of prohibited mode of the mobile communication device 104. This is for the purpose of avoiding such a situation that the prohibited mode of the mobile communication device 104 corresponding to the limited usage area is undesirably changed while the bearer fails to notice it. Thus, even if usage information about the location or time zone of the mobile communication device 104 was later changed so as not to satisfy the limited usage area, then the bearer can be prevented from forgetting to again change the setting of the prohibited mode.

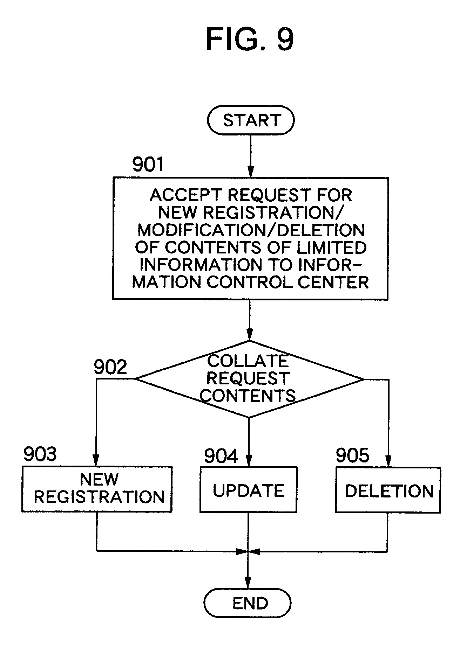

Fig. 9 is a flowchart showing how the information control center 105 performs the new registration, modification and deletion of the contents of a limited area demanded by the limited usage requester 103 in the present embodiment. Its procedure will be explained by referring to the flowchart of Fig. 9.

In a step 901, the information control center 105 accepts a limited usage request from the limited usage requester 103 at the utilization-information database registration/modification/deletion unit 207, and proceeds to a step 902. In the step 902, the utilization-information database registration/modification/deletion unit discriminates the contents of the request. When the discriminated result is new registration, the center proceeds to a step 903 and newly registers the request contents in the utilization information database 205. When the discriminated result is modification of the limited contents, the center proceeds to a step 904 and changes the contents of the utilization information database 205. When the discriminated result is deletion of the contents of the limited usage, the center proceeds to a step 905 and deletes the contents of the utilization information database 205. In this manner, setting of the usage information can be freely registered, modified and deleted according to the request of the limited usage requester 103.

As has been explained in the foregoing, in accordance with the communication method and system of the present embodiment, by grasping the position information of the mobile communication device in the form of latitude and longitude or in the form of latitude longitude and altitude and by collating the above information with the limited usage information or the usage information including a prohibited area set in the form of a range of latitude and longitude or a range of latitude longitude and altitude in the information control center, it is possible to control the prohibited mode of mobile device according to the usage information such as limited usage area, prohibited area and time zone set in the form of a range of latitude and longitude or range of latitude longitude and altitude, without installing respective usage detection/alarm devices or position alarm devices.

Further, since position grasping is not based on a wide range of cell but based on detailed usage limits expressed in the form of latitude and longitude or in the form of latitude, longitude and altitude; such a possibility can be minimized that even use of the mobile communication device not associated therewith in a buildings-dense area is restricted. Further, since there is no need to install a radio base station in a limited usage area, radio wave from the mobile device can be essentially restricted without sending radio wave up to the area.

In the foregoing embodiment, however, communication must be carried out between the mobile communication device 104 and information control center 105. Thus when it is difficult to perform the communication, there occurs such a problem that the system of the present invention cannot be used. In order to avoid the problem, an embodiment which follows is provided as its solution.

Explanation will be directed to a second embodiment wherein limited usage operation is performed only in the limited usage requester 103 and without using the information control center 105, by referring to the drawings. In this case, a system, to which the present invention is applied, is arranged so that an apparatus capable of acquiring the position information of the mobile communication device itself. such as a GPS is provided, and that, when the mobile communication device carrying the utilization-information database therein is moving toward a room on the second floor of a hospital as a restricted area, the system can collate the position of the mobile communication device with the limited area information of the utilization information database within the mobile communication device and, when finding a coincidence therebetween, the system changes the current mode of the mobile device to its prohibited mode according to the contents of a limitation request set in the utilization information database by the mobile communication device itself.

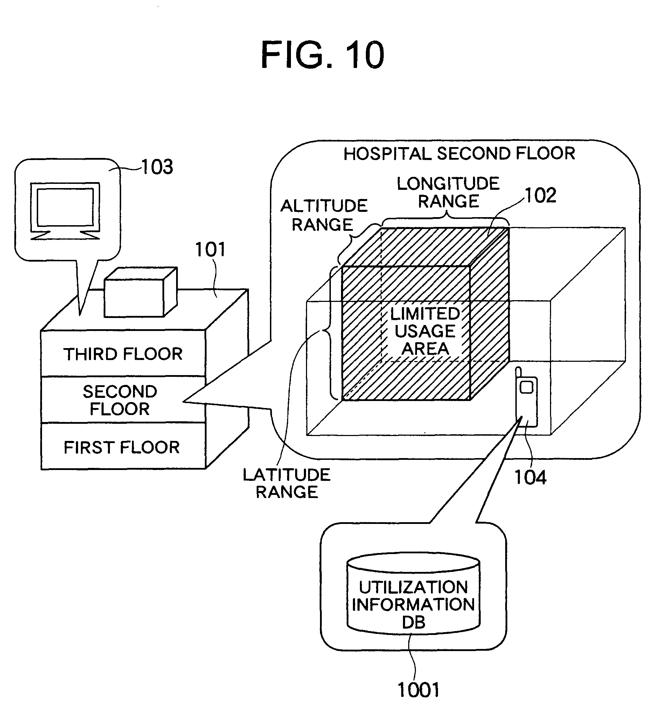

Fig. 10 schematically shows a network environment of the present embodiment, wherein collation in position information between the limited usage area and mobile communication device itself is carried out within the mobile communication device without use of the information control center 105. As shown in Fig. 10, the communication method and system, communication management method and apparatus, and mobile communication device method and apparatus in accordance with the present embodiment include a limited object 101, a limited usage area 102 of a mobile communication device provided for the limited object 101, a limited usage requester 103 who issues to an information control center a request to limit the usage of a mobile communication device in the limited usage area, an mobile communication device 104, and a utilization information database 1001 provided within the mobile communication device 104. The mobile communication device 104, which has a function of measuring position information such as GPS, collates the position information of the mobile communication device 104 with the limited usage area information of the utilization information database 1001 within the mobile communication device 104 and, depending on its collated result, performs a processing operation to limit the usage of the mobile device. The contents of the utilization information database 1001 are the same as those of the map information database 204. Acquisition of the positional information of the mobile communication device 104 can be realized by a GPS or Russian GLONASS (global navigation satellite system) similar thereto, position measurement by utilizing a European satellite such as a Galileo, position measurement based on the complementation of artificial pseudo satellites installed on the ground such as Pseudolites, a position measuring technique by utilizing the narrowness of a communication propagation area of a base station such as PHS, a position measuring technique based on a triangulation method by utilizing electromagnetic wave transmitted from the base station of portable telephone devices, a position grasping technique for getting position information from a fixed object placed on a road or the like when a mobile communication device passes by the object, or a system corresponding to a combination of two or more position measuring techniques such as grasping of a position with use of the GPS system and communication line. The mobile communication device 104 includes a portable terminal having a communication part such as a portable telephone device or PHS and personal digital assistants (PDA), and is not intended to means a single specific terminal.

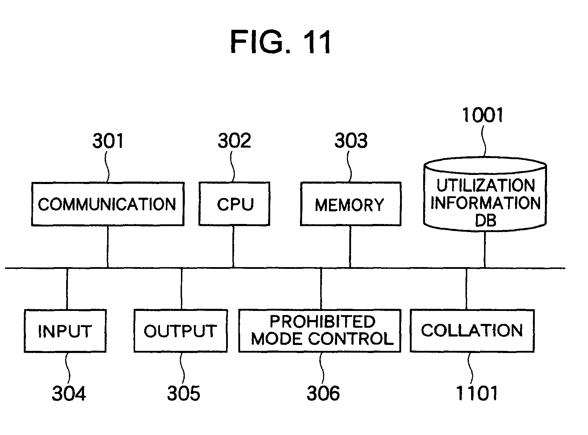

Fig. 11 shows a functional structure of the mobile communication device 104 in the present embodiment, wherein collation in the position information between the limited usage area and mobile communication device itself is carried out within the mobile communication device without use of the information control center 105. As shown in Fig. 11, the mobile communication device 104 of the present embodiment has a communication unit 301, a CPU 302, a memory 303, an output unit 305, a prohibited mode control unit 306, a utilization information database 1001, and a collation unit 1101.

In Fig. 11, in addition to the constituent components shown in Fig. 3, the utilization information database 1001 and collation unit 1101 are added. The utilization information database 1001 has request contents relating to limited usage areas and limited usage time zones demanded from the limited usage requester 103 as limited usage information. The collation unit 1101 collates the limited usage area of the utilization information database 1001 with the position information of the mobile communication device 104 or collates the limited usage time zone of the utilization information database 1001 with the current time.

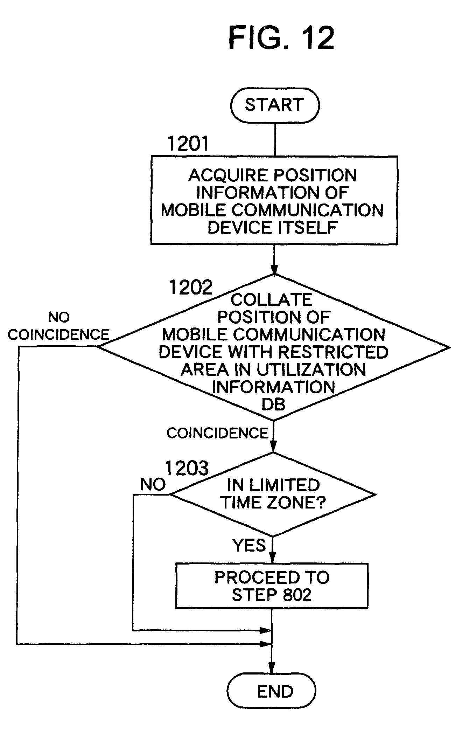

Fig. 12 is a flowchart showing a procedure of operations of the mobile communication device 104 without use of the information control center 105 when the mobile communication device collates the limited usage area with the position information of the mobile device itself within the mobile device in the present embodiment. The procedure will be explained by referring to the flowchart of Fig. 12.

In a step 1201, the mobile communication device 104 acquires its own position information. In a step 1202, the mobile communication device 104 collates at its collation unit 1101 the position information of the mobile communication device 104 with the position information of the limited usage area registered in the utilization information database 1001 within the mobile device. The utilization information database 1001 may be replaced with a temporary file saved on the memory 303. When finding a non-coincidence therebetween, the mobile device terminates its procedure. When finding a coincidence therebetween as a result of the collation, the mobile device proceeds to a step 1203 where the collation unit 1101 collates the restricted time zone of the utilization information database 1001 with the current time. When judging as a result of the collation that the current time is out of the restricted time zone, then mobile device terminates its procedure. When judging as a result of the collation that the current time is within the restricted time zone, the mobile device proceeds to a step 802 where a signal for control of the prohibited mode is sent from the collation unit 208 to the prohibited mode control unit 306. In the step 802 and subsequent steps, substantially the same procedure as in Fig. 8 is carried out.

As has been explained in the foregoing, in accordance with the communication method and system of the present embodiment, since the prohibited mode of the mobile communication device can be controlled according to the limited usage information by the mobile communication device alone without communication between the mobile communication device and information control center, there can be solved a problem that, when it is difficult to communicate, the present system cannot be used.

As mentioned above, since a specific limited usage area in the form of limits of latitude and longitude or of latitude, longitude and altitude is provided, the mobile device entered into the limited usage area can be strictly picked up. Further, the position information of the mobile communication device can be grasped in the form of limits of latitude and longitude or of latitude, longitude and altitude without the need for installation of the device for transmitting radio wave in the limited usage area. By collating the position information with the limited usage information such as limited area or time zone of prohibition of use of the mobile communication device provided in the form of limits of latitude and longitude or latitude, longitude and altitude stored in the information control center; the mobile communication device can be controlled to a prohibited mode corresponding to the limited usage information regardless of its moving speed.

In accordance with the above-described embodiments, the mobile communication device can be controlled to the prohibited mode corresponding to the limited usage information.

## Claims

1. A communication method for transmitting control information to a mobile communication device (104) on the basis of position information received from the mobile communication device, comprising the steps of:
holding identification information of said mobile communication device, usage information for change of a function of said mobile communication device, and usage range information indicating a range where a function of said mobile device is limited, said usage range information being expressed in terms of ranges of latitude, longitude and altitude;
inputting the identification information of said mobile communication device and said position information including the latitude, longitude and altitude; and
judging whether or not said input position information is within a range indicated by said usage range information and corresponding to said input identification information and when the input position information is within said range, outputting said usage information corresponding to said input identification information to said mobile communication device.

2. The method of claim 1, wherein said usage range information further includes a time zone of the function of said mobile communication device to be limited, and wherein, when it is judged in said judging step that said input position information is within the range indicated by said usage range information, a held time is referred to and judged to be or not to be within said time zone and, when said held time is judged to be within the time zone, said usage information corresponding to said input identification information is output to said mobile communication device.

3. The method of claim 1, wherein said usage information includes alarm information informing of a change of the function of said mobile communication device.

4. The method of claim 1, wherein said alarm information is any of the following:
character information to be displayed on said mobile communication device;
sound information to be issued from said mobile communication device;
vibrator control information for said mobile communication device;
control information for a light source;
control information for a power switch;
control information for an incoming-call sound of said mobile communication device.

5. A communication method in a mobile communication device (104) including computing a position including latitude, longitude and altitude, holding usage range information indicating a range where a function of the mobile device is limited, said usage range information being expressed in terms of ranges of latitude, longitude and altitude, and controlling the mobile device on the basis of said usage range information, said method comprising the steps of:
holding usage information for function change and said usage range information associated therewith; and
judging whether or not said computed position is within the range indicated by said usage range information and, when the position is within the range, outputting said usage information corresponding to said input usage range information.

6. A communication control device (105) for transmitting control information to a mobile communication device (104) on the basis of position information received from the mobile communication device, comprising:
storage means for storing therein identification information of said mobile communication device, usage information for change of a function of the mobile communication device, and usage range information indicating a range where a function of the mobile device is limited, said usage range information being expressed in terms of ranges of latitude, longitude and altitude; and
control means for inputting the identification information of said mobile communication device and said position information including latitude, longitude and altitude, and judging whether or not said input position information is within a range indicated by said usage range information and corresponding to said input identification information and when the input position information is within said range, for outputting said usage information corresponding to said input identification information to said mobile communication device.

7. A mobile communication device (104) for computing a position including latitude, longitude and altitude, holding usage range information indicating a range where a function of the mobile device is limited, said usage range information being expressed in terms of ranges of latitude, longitude and altitude, and controlling the mobile device on the basis of said limited usage information, said mobile device comprising:
storage means for storing usage information for function change and said usage range information associated therewith; and
control means for judging whether or not said computed position is within the range indicated by said usage range information and, when the position is within the range, for outputting said usage information corresponding to said input usage range information.

8. A communication control program for transmitting control information to a mobile communication device (104) on the basis of position information received from the mobile communication device, said program comprising:
a first code for storing identification information of said mobile communication device, usage information for change of a function of the mobile communication device, and usage range information indicating a range where a function of the mobile device is limited, said usage range information being expressed in terms of ranges of latitude, longitude and altitude; and
a second code for inputting the identification information of said mobile communication device and said position information including the latitude, longitude and altitude, and judging whether or not said input position information is within a range indicated by said usage range information and corresponding to said input identification information and when the input position information is within said range, for outputting said usage information corresponding to said input identification information to said mobile communication device.

9. A communication program for computing a position including latitude, longitude and altitude, holding usage range information indicating a range where a function of a mobile communication device is limited, said usage range information being expressed in terms of ranges of latitude, longitude and altitude, and controlling the mobile device on the basis of said usage range information, said program comprising:
a first code for storing usage information for function change and said usage range information associated therewith; and
a second code for judging whether or not said computed position is within the range indicated by said usage range information and, when the position is within the range, for outputting said usage information corresponding to said input usage range information.
